# FASCICULE DE BREVET EUROPEEN

(11) **EP 0 688 063 B1**
(45) Date de publication et mention de la délivrance du brevet: **01.12.1999**
(21) Numéro de dépôt: 95401292.8
(22) Date de dépôt: 02.06.1995
(51) Int. Cl.: H01R 4/34, F16B 41/00

(54) **Appareil électrique muni d'une borne à vis**
Elektrisches Gerät mit Schraubklemme
Electrical apparatus with clamping screw

(30) Priorité: 13.06.1994 FR 9407284
(43) Date de publication de la demande: 20.12.1995
(73) Titulaire: Schneider Electric Industries SA, 92100 Boulogne Billancourt (FR)
(72) Inventeur: Eschermann,Guy, F-21800 Chevigny-Saint-Sauveur (FR); Merlin, Pierre, F-21121 Fontaine les Dijon (FR)
(74) Mandataire: Carias, Alain

(56) Documents cités:
- FR-A- 2 563 947
- FR-A- 2 667 989
- FR-A- 2 675 639
- US-A- 3 414 866

## Description

La présente invention concerne un appareil électrique comprenant un couvercle ou capot en matière plastique et muni d'au moins une borne de connexion utilisant une vis de serrage de conducteur dont la tige filetée peut se visser dans un trou de serrage taraudé d'une pièce de connexion fixe et dont la tête est elle-même filetée pour assurer, en fin de dévissage, le maintien de cette tête dans un trou cylindrique de retenue ménagé dans le capot.

Un appareil comprenant des bornes de connexion de ce type est décrit dans le brevet FR-2 667 989. L'opérateur qui intervient sur une telle borne éprouve quelques difficultés pour visser ou dévisser la vis lorsque les filetages de la tête et du trou correspondant taraudé dans le capot sont en prise.

L'invention a pour but de parer à cet inconvénient en permettant à un appareil électrique d'accepter la connexion de câbles ou de cosses fermées au moyen de bornes à vis, tout en réduisant l'effort de manoeuvre des vis.

Elle a pour autre but de ne pas altérer l'alignement de la vis ni le taraudage ménagé dans le capot.

Selon l'invention, le filetage de retenue est prévu sur une partie interne du trou cylindrique du capot, la partie externe restante du trou cylindrique ayant une longueur suffisante pour loger l'essentiel de la longueur de la partie filetée de la tête de vis. Il en résulte une diminution importante de l'effort de manoeuvre de la vis.

De préférence, la vis est munie d'une plaquette de serrage imperdable applicable d'un côté contre le conducteur à serrer et de l'autre côté contre une surface de butée du capot, le filetage de la tête de vis étant essentiellement dégagé du filetage de retenue quand la plaquette est en butée. Il en résulte que les filets de retenue ne sont pas endommagés quand la vis tourne à vide après mise en butée de la plaquette de serrage.

Le filetage de retenue peut avantageusement être prévu sur des éléments radialement saillants et occupant de faibles secteurs prévus à intervalles angulaires réguliers, par exemple à 120°, de la circonférence du trou cylindrique du capot.

Le diamètre de la partie taraudée et de la partie non taraudée du trou cylindrique du capot diffèrent avantageusement d'un faible jeu radial pour permettre un alignement satisfaisant de la tige filetée avec le trou de serrage lorsque la vis, dont la tête est engagée dans le filetage de retenue, doit être vissée pour serrer le conducteur au moyen de la plaquette.

Lorsque le filetage de retenue est prétaraudé, il est de préférence réalisé avec un déclassement engendrant un jeu prédéterminé absorbant le déphasage angulaire des assemblages filetés de serrage de la tige et de retenue de la tête.

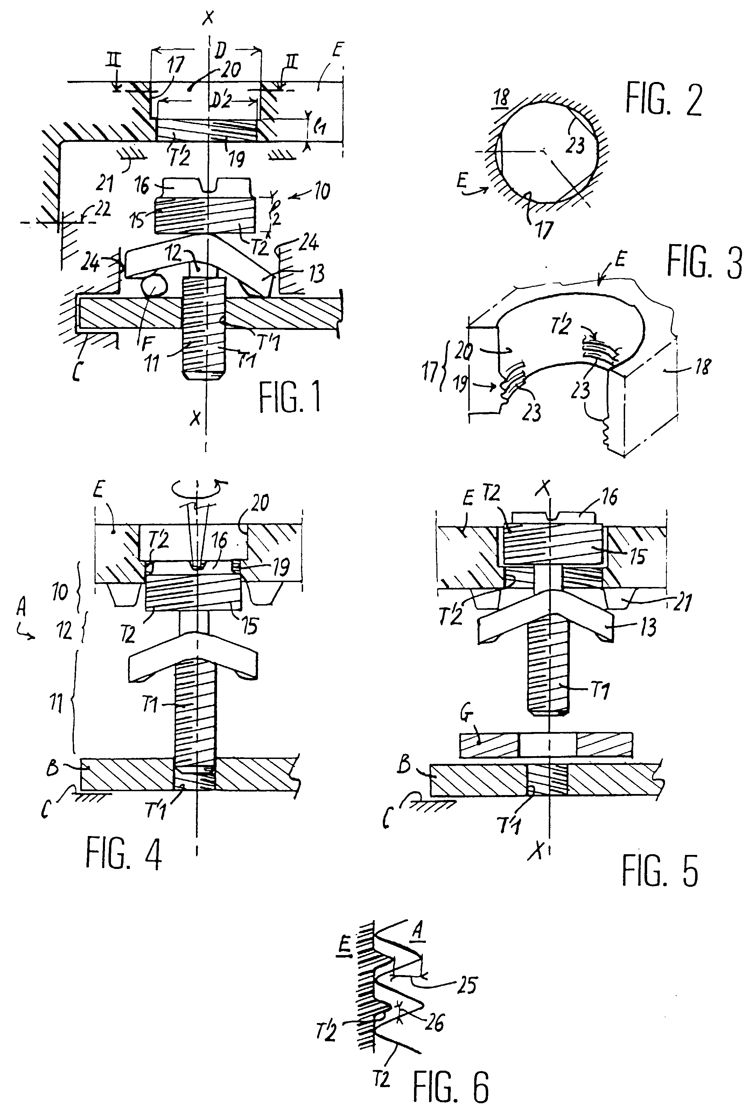

Un mode de réalisation non limitatif de l'invention va être décrit ci-après en regard des dessins.
- Sur les dessins, la figure 1 représente schématiquement une partie d'un appareil électrique muni d'une borne de connexion à vis spécifique selon l'invention.
- La figure 2 est une coupe selon II-II d'un détail de la figure 1.
- La figure 3 est une vue en perspective avant arrachement de ce détail.
- Les figures 4 et 5 montrent la borne à vis dans deux phases de manoeuvre différentes.
- La figure 6 montre un exemple de déclassement du filetage de retenue.

La borne à vis illustrée sur les figures comprend une vis A destinée à coopérer d'une part avec une plage conductrice fixe B maintenue fixe dans un socle ou un boîtier C d'appareil électrique à basse tension et d'autre part avec un capot E fixé au socle de l'appareil. Le terme capot ci-après utilisé doit être compris au sens large et désigne tout capot, couvercle ou boîtier susceptible d'envelopper tout ou partie d'une borne ou de plusieurs bornes de l'appareil.

La vis A comporte une tête 10, une tige filetée 11 et un noyau 12 intermédiaire entre la tête et la tige filetée une plaquette 13 de serrage est retenue de manière imperdable, mais avec une certaine liberté de mouvement, sur le noyau 12. La plaquette 13 peut être rectangulaire et plate ou peut avoir une forme en V comme indiqué sur les figures. Le filetage mâle T1 de la tige 11 coopère avec un filetage femelle T'1 prévu dans un perçage taraudé dans la plage conductrice fixe B.

La tête 10 de la vis présente une partie filetée 15 de diamètre supérieur à celui de la tige 11 et une partie de manoeuvre 16 munie d'empreintes pour un toumevis ; cette partie 16 est lisse et a un diamètre réduit par rapport à la partie 15. Le filetage mâle T2 de la partie 15 coopère avec un filetage femelle de retenue T'2 prévu dans un trou cylindrique 17 ménagé dans une paroi relativement rigide 18 du capot E qui est perpendiculaire à l'axe X-X de la vis. Les pas des filetages T1, T2 sont identiques et la partie 16 de diamètre réduit permet de centrer le filetage T2 sur T'2.

Pour réduire les efforts de manoeuvre, le filetage de retenue T'2 est prévu seulement sur une partie interne 19 de longueur ℓ₁ du trou cylindrique 17 du capot E ; la partie externe restante 20 du trou 17 n'est pas filetée et a une longueur apte à loger la longueur de la partie filetée 15 de la tête de vis, ℓ₁ étant inférieure à la demi-longueur totale du trou. Le diamètre D de la partie 20 du trou 17 est légèrement supérieur au diamètre D'2 de la partie 19 (diamètre extérieur du filetage T'2) de façon que la partie 15 de la tête de vis puisse se déplacer avec un faible jeu radial dans la partie 20, afin de maintenir un bon guidage axial de la vis sans surplus d'efforts de manoeuvre.

Des surfaces de butée 21 sont prévues sur le côté intérieur du capot E pour arrêter la plaquette 13 et éviter l'extraction de la vis A hors de l'appareil. Lorsque la plaquette 13 est appliquée contre les surfaces 21, un jeu axial e existe entre la tête 10 de la vis et la partie filetée 19 du trou 17. Le capot E est fixé au socle C de l'appareil par des liaisons latérales 22 permanentes ou démontables, par exemple à encliquetage, agencées pour résister aux efforts exercés selon X-X sur la paroi 18 quand les filetages T2, T'2 commencent à venir en prise alors que les filetages T1, T'1 sont encore en prise.

Le filetage femelle de retenue T'2 peut être prévu sur toute la circonférence d'une partie de longueur ℓ₁ du trou cylindrique 17 (figure 1). Il est cependant de préférence prévu sur de petits éléments radialement saillants en forme de secteurs 23 de la circonférence, par exemple à 120° (figures 2 et 3). La longueur totales des filets du filetage T'2 est nettement inférieure à celle des filets du filetage T2. Des cloisons latérales 24 sont prévues dans le boîtier C et/ou le capot E pour isoler la bome et guider la plaquette 13 dans son mouvement de translation selon X-X.

Le filetage femelle de retenue T'2 peut être obtenu soit par autotaraudage du trou 17 de la paroi 18 en matière plastique par le filetage mâle T2 de la tête métallique de la vis, soit par un taraudage préalable du trou 17 avec un jeu prédéterminé pour absorber le déphasage angulaire des assemblages filetés T1,T'1 de la tige 11 et T2,T'2 de la tête 10.

Le fonctionnement de la bome décrite va être décrit à présent en regard des figures 1, et 5.

Pour serrer l'extrémité nue d'un conducteur ou câble F dans la bome, la vis A est mise en rotation au moyen d'un toumevis introduit par le trou cylindrique 17 de façon à venir de la position "ouverte" illustrée sur la figure 4 ou 5 dans laquelle les filetages T2,T'2 sont en prise ou d'une position intermédiaire dans laquelle les filetages T2,T'2 ne sont pas en prise jusqu'à la position de serrage illustrée figure 1. L'étrier 13, maintenu imperdable sur le noyau 12 de la vis, est guidé par les cloisons 24 et pivote pour s'adapter au conducteur F et pour le serrer entre lui-même, mis en butée contre la face inférieure de la tête de vis, et la plage conductrice fixe B.

Pour ouvrir pleinement la bome et notamment lui permettre d'accepter l'introduction de cosses fermées G (figure 5), on met en rotation la vis (figure 4) de façon à engager au moins un premier filet de T2 dans T'2, tandis que les filetages T1,T'1 restent en prise. Le centrage de la tête 10 dans le trou 17 est obtenu par sa partie réduite 16 et/ou par des conformations de centrage liées au capot E. Si le trou 17 n'a pas été préalablement taraudé, les filets mâles T2 créent les filets femelles T'2 dans les éléments radialement saillants 23 tandis que la plage fixe B reprend les efforts correspondants via les filets T1,T'1. Si le trou 17 a été préalablement doté d'un filetage T'2, le déphasage angulaire des assemblages filetés T1,T'1 de la tige et T2,T'2 de la tête de vis peut être rattrapé par la réalisation du taraudage T'2 avec un déclassement déterminant un jeu radial 25 et un jeu axial 26 absorbant le déphasage.

## Revendications

1. Appareil électrique comprenant au moins une bome de connexion qui comporte une vis (A) munie d'une tête (10), d'une tige filetée de pas T₁ et d'une plaquette de serrage (13) retenue de manière imperdable entre la tête et la tige filetée,
- la tige filetée étant destinée à coopérer avec un trou taraudé (T'₁) de serrage ménagé dans une pièce de connexion conductrice fixe (B) de l'appareil, pour permettre le serrage d'un conducteur (F) entre la plaquette de serrage et la plage fixe (B) ,
- la tête de vis (10) présentant une partie filetée (T₂) pour coopérer avec un filetage de retenue (T'₂) taraudé dans un trou cylindrique (17) d'un capot en matière plastique (E) de l'appareil,
caractérisé par le fait que
- le filetage de retenue (T'2) de pas égal à celui du trou taraudé de serrage (T'₁) est prévu seulement sur une partie interne (19) du trou cylindrique (17) du capot (E),
- la partie externe restante (20) du trou cylindrique (17) de diamètre (D) légèrement supérieur au diamètre (D'₂) de ladite partie interne (19) a une longueur apte à loger l'essentiel de la longueur (ℓ₂) de la partie filetée (15) de la tête (10) de la vis (A).

2. Appareil selon la revendication 1, caractérisé par le fait que la plaquette de serrage (13) peut s'appliquer contre une surface de butée (21) du capot (E) afin d'assurer l'imperdabilité de la vis (A), le filetage (T2) de la tête de vis (10) étant essentiellement dégagé du filetage de retenue (T'2) quand la plaquette est en butée.

3. Appareil selon la revendication 1, caractérisé par le fait que le filetage de retenue (T'2) est seulement prévu sur de petits éléments radialement saillants en forme de secteurs (23) de la circonférence du trou cylindrique (17).

4. Appareil selon la revendication 3, caractérisé par le fait que les éléments radialement saillants (23) sont prévus à intervalles angulaires de 120°.

5. Appareil selon la revendication 1, caractérisé par le fait que la partie filetée (T2) de la tête de vis (10) se loge dans la partie (20) non taraudée du trou cylindrique (17) du capot (E) avec un faible jeu radial.

6. Appareil selon la revendication 1, caractérisé par le fait que la tête de vis (10) présente également une partie lisse (16) de diamètre réduit permettant le centrage de la partie filetée (T2) de la tête de vis sur le filetage de retenue (T'2).

7. Appareil selon la revendication 1, caractérisé par le fait que le filetage de retenue (T'2) est autotaraudé sur des saillies radiales (23) du trou cylindrique (17) du capot (E) par le filetage (T2) de la tête de vis (10).

8. Appareil selon la revendication 1, caractérisé par le fait que le filetage de retenue (T'2) est taraudé au préalable dans le trou cylindrique (17) avec un déclassement qui engendre un jeu prédéterminé (25,26) absorbant le déphasage angulaire des assemblages filetés (T1,T'1) de serrage de la tige et (T2,T'2) de retenue de la tête.

## Patentansprüche

1. Elektrisches Gerät mit mindestens einer Anschlussklemme (A) mit einem Kopf (10), einer Gewindespindel mit Teilung (T1) und einem Klemmplättchen (13), das unverlierbar zwischen dem Kopf und der Gewindespindel festgehalten wird, wobei
- die Gewindespindel mit einem Gewindeloch (T'1) zusammenwirken soll, das in einem festen leitenden Anschlussteil (B) des Gerätes vorgesehen ist, um das Einklemmen eines Leiters (F) zwischen dem Klemmplättchen und dem festen Bereich (B) zu ermöglichen,
- der Schraubenkopf (10) einen Gewindeteil (T2) aufweist, um mit einem Arretiergewinde (T'2) in einem zylindrischen Loch (17) einer Haube (E) aus Kunststoff des Gerätes zusammenzuwirken,
dadurch gekennzeichnet, dass
- das Arretiergewinde (T'2) mit einer Teilung wie diejenige des Gewindeloches (T'1) nur an einem internen Teil (19) des zylindrischen Loches (17) der Haube (E) vorgesehen ist,
- der restliche externe Teil (20) des zylindrischen Loches (17), mit einem etwas grösseren Durchmesser (D) als der Durchmesser (D'2) des besagten internen Teils (19), eine Länge aufweist, um den grössten Teil der Länge (ℓ2) des Gewindeteils (15) des Kopfes (10) der Schraube (A) aufzunehmen.

2. Gerät nach Anspruch 1, dadurch gekennzeichnet, dass sich das Klemmplättchen (13) gegen eine Anschlagfläche (21) der Haube (E) drücken kann, um die Unverlierbarkeit der Schraube (A) zu gewährleisten, wobei das Gewinde (T2) des Schraubenkopfes (10) im wesentlichen aus dem Arretiergewinde (T'2) herausragt, wenn sich das Plättchen am Anschlag befindet.

3. Gerät nach Anspruch 1, dadurch gekennzeichnet, dass das Arretiergewinde (T'2) nur an kleinen radial auskragenden Elementen in Form von Abschnitten (23) des Umfangs des zylindrischen Loches (17) vorgesehen ist.

4. Gerät nach Anspruch 3, dadurch gekennzeichnet, dass die radial auskragenden Elemente (23) in Winkelintervallen von 120° vorgesehen sind.

5. Gerät nach Anspruch 1, dadurch gekennzeichnet, dass der Gewindeteil (T2) des Schraubenkopfes (10) in den Teil (20) ohne Gewinde des zylindrischen Loches (17) der Haube (E) mit einem geringen radialen Spiel eingeführt wird.

6. Gerät nach Anspruch 1, dadurch gekennzeichnet, dass der Schraubenkopf (10) ebenfalls einen glatten Teil (16) mit kleinem Durchmesser aufweist, der das Zentrieren des Gewindeteils (T2) des Schraubenkopfes auf das Arretiergewinde (T'2) ermöglicht.

7. Gerät nach Anspruch 1, dadurch gekennzeichnet, dass das Arretiergewinde (T'2) vom Gewinde (T2) des Schraubenkopfes (10) an radialen Auskragungen (23) des zylindrischen Loches (17) der Haube (E) geschnitten wird.

8. Gerät nach Anspruch 1, dadurch gekennzeichnet, dass das Arretiergewinde (T'2) vorher im zylindrischen Loch (17) mit einer Herabsetzung hergestellt wird, die ein vorgegebenes Spiel (25, 26) bewirkt, das die Winkelphasenverschiebung der Spindel- und der Arretiergewindemontagen (T1, T'1 und T2, T'2) des Kopfes absorbiert.

## Claims

1. Electrical device comprising at least one connection terminal that comprises a screw (A) equipped with a head (10), a threaded rod with pitch T1 and a tightening plate (13) retained between the head and the captive threaded rod,
- the threaded rod being designed to cooperate with a threaded tightening hole (T'1) formed in a fixed conducting connection part (B) of the device, so that a conductor (F) can be tightened between the tightening plate and the fixed strip (B);
- the screw head (10) presenting a threaded part (T2) to cooperate with a retaining thread (T'2) tapped in a cylindrical hole (17) in a plastic cap (E) fitted on the equipment,
characterized by the fact that:
- the retaining thread (T'2) with the same pitch as the tapped tightening hole (T'1) is provided only on an internal part (19) of the cylindrical hole (17) in the cap (E);
- the remaining external part (20) of the cylindrical hole (17) with diameter (D) slightly greater than the diameter (D'2) of the said internal part (19) is long enough to contain most of the length (ℓ2) of the threaded part (15) of the head (10) of the screw (A).

2. Device according to claim 1, characterized by the fact that the tightening plate (13) may come into contact with a limit stop surface (21) of the cap (E) to ensure that the screw (A) cannot get lost, the thread (T2) of the screw head (10) being essentially disengaged from the retaining thread (T'2) when the plate is at its limit stop.

3. Device according to claim 1, characterized by the fact that the retaining thread (T'2) is provided only on small radially projecting elements in the form of sectors (23) around the circumference of the cylindrical hole (17).

4. Device according to claim 3, characterized by the fact that the radially projecting elements (23) are provided at angular intervals of 120°.

5. Device according to claim 1, characterized by the fact that the threaded part (T2) of the screw head (10) fits into the untapped part (20) of the cylindrical hole (17) of the cap (E) with a small radial clearance.

6. Device according to claim 1, characterized by the fact that the screw head (10) also has a smoothed part (16) with a reduced diameter for centering the threaded part (T2) of the screw head on the retaining thread (T'2).

7. Device according to claim 1, characterized by the fact that the retaining thread (T'2) is self-tapped on radial projections (23) of the cylindrical hole (17) of the cap (E) by the thread (T2) of the screw head (10).

8. Device according to claim 1, characterized by the fact that the retaining thread (T'2) is tapped in advance in the cylindrical hole (17) with a declassification that provides a pre-determined clearance (25, 26) absorbing the angular offset between the threaded rod tightening assembly (T1, T'1) and the head retaining assembly (T2, T'2).
